# EUROPÄISCHE PATENTANMELDUNG

(11) **EP 3 623 309 A1**
(43) Veröffentlichungstag der Anmeldung: **18.03.2020**
(21) Anmeldenummer: 19151916.4
(22) Anmeldetag: 15.01.2019
(51) Int. Cl.: B65D 19/18, B32B 27/12, B32B 3/12, B32B 5/02, B32B 7/12

(54) **TRANSPORTBEHÄLTER**

(30) Priorität: 14.09.2018 DE 102018122590
(71) Anmelder: Ebnet (Jun.), Josef, 93491 Stamsried/Cham (DE); Ebnet (Sen.), Josef, 93491 Stamsried/Cham (DE)
(72) Erfinder: Ebnet (Jun.), Josef, 93491 Stamsried/Cham (DE); Ebnet (Sen.), Josef, 93491 Stamsried/Cham (DE)
(74) Vertreter: Baudler, Ron

(57) **Zusammenfassung**

Die Erfindung betrifft einen Transportbehälter (1) für Bauteile, wobei der Transportbehälter (1) einen Bodenabschnitt (2) sowie mehrere Seitenwände (3) aufweist, die gemeinsam mit dem Bodenabschnitt (2) einen, im bestimmungsgemäßen Gebrauch von oben und/oder von der Seite zugänglichen, Aufnahmeraum (4) begrenzen, wobei die Seitenwände (3) jeweils einen inneren Wandabschnitt (9) und einen parallel zum inneren Wandabschnitt (9) verlaufenden und eine geringere Höhe als der innere Wandabschnitt (9) aufweisenden äußeren Wandabschnitt (10) umfassen, wobei wenigstens zwei gegenüberliegende innere Wandabschnitte (9) vertikal verlaufende Faltkanten (11) aufweisen, und wobei die zuletzt genannten inneren Wandabschnitte (9) entlang ihrer jeweiligen Faltkante(n) (11) von einer nicht gefalteten Gebrauchsstellung in eine gefaltete Transportstellung faltbar sind. Erfindungsgemäß ist vorgesehen, dass der Transportbehälter (1) Sicherungsmittel aufweist, mit deren Hilfe die die Faltkanten (11) aufweisenden inneren Wandabschnitte (9) in ihrer Gebrauchsstellung jeweils gegenüber einem äußeren Wandabschnitt (10) fixierbar sind, um einem ungewollten Falten der jeweiligen inneren Wandabschnitte (9) entgegenzuwirken.

## Beschreibung

Die vorliegende Erfindung betrifft diverse Ausführungen eines Transportbehälters für Bauteile, wobei die Transportbehälter jeweils einen Bodenabschnitt sowie mehrere Seitenwände aufweisen, die gemeinsam mit dem Bodenabschnitt einen, im bestimmungsgemäßen Gebrauch von oben und/oder von der Seite zugänglichen, Aufnahmeraum begrenzen.

Gattungsgemäße Transportbehälter dienen beispielsweise dem Transport von Einzelteile in der Automobilindustrie, beispielsweise Lampengehäuse von einem Bauteilelager zu einer Fertigungsstraße. Entsprechende Transportbehälter, und im Übrigen auch die nachfolgend erfindungsgemäßen Transportbehälter, weisen in der Regel einen rechteckigen Bodenabschnitt auf, der sich im Wesentlichen in einer horizontalen Ebene erstreckt. Der Bodenabschnitt kann Aussparungen für eine Gabelstaplergabel oder sonstige Verstrebungen aufweisen. Die Höhe des Bodenabschnitts liegt im Allgemeinen zwischen 5 cm und 20 cm. Die Breite und Tiefe des Bodenabschnitts liegt meist zwischen 50 cm und 150 cm.

Mit dem Bodenabschnitt sind in der Regel vier flächige Wandabschnitte verbunden, die in der Draufsicht eine Rechteckstruktur aufweisen. Auch die Wandabschnitte selbst sind in einer Seitenansicht vorzugsweise rechteckig und im Wesentlichen geschlossen ausgebildet. Zusammen mit dem Bodenabschnitt begrenzen die Wandabschnitte einen quaderförmigen Aufnahmeraum, in dem die entsprechenden Bauteile aufgenommen werden können.

Werden entsprechende Transportbehälter mit einem Gabelstapler bewegt, so besteht die Gefahr, dass die Gabelstaplergabel beim Aufnehmen des Transportbehälters nicht in die dafür vorgesehenen Freiräume im Bodenabschnitt eindringt, sondern mit einer der Seitenwände kollidiert. Dies führt zu meist irreparablen Schäden an der jeweiligen Seitenwand.

Ferner ist es bekannt, dass zumindest ein Teil der Seitenwände bzw. einzelne Abschnitte derselben vertikale Faltkanten aufweist, über die die entsprechende Seitenwand von einer Gebrauchsstellung in eine Transportstellung faltbar ist. Während die Seitenwand in der Gebrauchsstellung in der Regel eine einheitliche Ebene bildet, ist sie in der Transportstellung entlang der Faltkante derart gefaltet, dass die benachbart zur Faltkante liegenden Abschnitte der entsprechenden Seitenwand in zwei parallelen Ebenen liegen. Hierdurch wird der Flächenbedarf der entsprechenden Seitenwand verringert, so dass sie flächig auf den Bodenabschnitt abgelegt und mit diesem gemeinsam gelagert werden kann. Die Höhe des Bodenabschnitts mit den darauf abgelegten Seitenwänden ist in diesem Fall wesentlich geringer, als die Höhe des fertig montierten Transportbehälters.

Durch die Faltkante besteht jedoch die Gefahr, dass die entsprechende Seitenwand bei Benutzung des Transportbehälters nach innen gefaltet wird, wodurch die Stabilität des Transportbehälters ebenfalls verringert wird.

Aufgabe der vorliegenden Erfindung ist es daher, die Standfestigkeit bzw. Stabilität entsprechender Transportbehälter zu verbessern.

Die Aufgabe wird gelöst durch einen Transportbehälter mit den Merkmalen des unabhängigen Patentanspruchs.

Prinzipiell ist es denkbar, dass die Seitenwände jeweils einen inneren Wandabschnitt und einen parallel zum inneren Wandabschnitt verlaufenden und eine geringere Höhe als der innere Wandabschnitt aufweisenden äußeren Wandabschnitt umfassen. Hinsichtlich möglicher Ausgestaltungen des inneren und/oder äußeren Wandabschnitts wird auf die bisherige und nachfolgende Beschreibung verwiesen.

In jedem Fall kann vorgesehen sein, dass wenigstens zwei gegenüberliegende innere Wandabschnitte (die vorzugsweise in ihrer Gebrauchsstellung parallel zueinander verlaufen) vertikal verlaufende Faltkanten aufweisen, wobei der Transportbehälter vorzugsweise vier innere Wandabschnitte aufweist, die in einer Draufsicht auf den Transportbehälter eine Rechteckstruktur bilden.

Die Faltkanten ermöglichen in diesem Fall ein Falten des entsprechenden inneren Wandabschnitts derart, dass die Faltkanten gegenüberliegender innere Wandabschnitte aufeinander zu bewegt werden. Hierdurch werden auch die beiden zwischen den genannten Wandabschnitten liegenden verbleibenden inneren Wandabschnitte aufeinander zu bewegt. Im Ergebnis kann damit die durch die inneren Wandabschnitte gebildete Rechteckstruktur zusammengelegt werden, so dass der Platzbedarf für den Transport eines leeren Transportbehälters signifikant verringert werden kann. Die inneren Wandabschnitte, die die genannten Faltkanten aufweisen, weisen in diesem Fall ihre Transportstellung auf.

Prinzipiell kann der Faltvorgang ausgehend von der Gebrauchsstellung dadurch initiiert werden, dass eine Kraft von außen auf die jeweiligen Faltkanten ausgeübt wird. Eine entsprechende Kraft kann jedoch auch dadurch entstehen, dass in den Aufnahmeraum ein Gefache zur Aufnahme entsprechend zu transportierender Bauteile eingebracht wird, das wiederum im oberen Bereich an wenigstens zwei inneren Wandabschnitten befestigt wird. Durch die Gewichtskraft der sich in dem Gefache befindlichen Bauteile entsteht eine Kraft, die ausreicht, zumindest ein teilweises Falten der entsprechenden inneren Wandabschnitte zu bewirken. Dies ist jedoch beim Transport der Bauteile nicht erwünscht.

Um einem ungewollten Falten der jeweiligen inneren Wandabschnitte entgegenzuwirken, ist vorgesehen, dass der Transportbehälter Sicherungsmittel aufweist, mit deren Hilfe die die Faltkanten aufweisenden inneren Wandabschnitte in ihrer Gebrauchsstellung jeweils gegenüber einem äußeren Wandabschnitt fixierbar sind.

Mit anderen Worten sind also Mittel vorhanden, über die der innere Wandabschnitt mit dem äußeren Wandabschnitt derselben Seitenwand, vorzugsweise im Bereich der entsprechenden Faltkante, verbindbar ist. Der innere Wandabschnitt wird also von dem benachbarten äußeren Wandabschnitt in seiner Gebrauchsstellung gehalten, wenn auf den entsprechenden inneren Wandabschnitt eine Kraft einwirkt, die den beschriebenen Faltvorgang begünstigen bzw. initiieren würde.

Der äußere Wandabschnitt wirkt also als Stütze bzw. Halteeinheit für den inneren Wandabschnitt. Wird das entsprechende Sicherungsmittel schließlich gelöst, so kann der innere Wandabschnitt unabhängig vom äußeren Wandabschnitt gefaltet werden, um seine Transportstellung einnehmen zu können.

Ebenso ist es vorteilhaft, wenn die Sicherungsmittel Haken oder Riegel umfassen, die im Bereich der die Faltkanten aufweisenden inneren Wandabschnitte und/oder im Bereich der parallel hierzu verlaufenden äußeren Wandabschnitte angeordnet sind. Vorzugsweise ist jede innere Seitenwand, die eine Faltkante aufweist, mit einem oder mehreren der genannten Haken oder Riegel ausgerüstet, die wiederum mit einer entsprechenden Gegenfläche zusammenwirken können, die durch den benachbarten äußeren Wandabschnitt bzw. ein mit diesem verbundenen Bauteil gebildet wird.

Selbstverständlich ist es auch denkbar, dass die Riegel oder Haken jeweils an einem äußeren Wandabschnitt angeordnet sind, der parallel zu einem inneren Wandabschnitt mit Faltkante verläuft. In diesem Fall sollte der jeweilige innere Wandabschnitt mit Faltkante eine entsprechende Gegenfläche aufweisen, mit der der Regel bzw. Haken zusammenwirken kann, wenn sich der entsprechende innere Wandabschnitt in seiner Gebrauchsstellung befindet.

Insbesondere ist es von Vorteil, wenn die die Faltkanten aufweisenden inneren Wandabschnitte und/oder die parallel hierzu verlaufenden äußeren Wandabschnitte zumindest einen Halteabschnitt aufweisen, mit denen die Haken oder Riegel in der Gebrauchsstellung der inneren Wandabschnitte zusammenwirken. Der jeweilige Halteabschnitt bildet oder ist Teil der oben genannten Gegenfläche. Insbesondere ist es denkbar, dass die äußeren Wandabschnitte durch eine Kunststoffplatte gebildet werden oder eine solche umfassen (eventuell auch verstärkt durch das oben beschriebene Gewebe).

Zusätzlich oder alternativ können die entsprechenden äußeren Wandabschnitte, die parallel zu den inneren Wandabschnitten mit Faltkante verlaufen, einen entsprechenden Halteabschnitt aufweisen, der beispielsweise durch ein oder mehrere Metallelemente gebildet sind.

Beispielsweise wäre es denkbar, dass der entsprechende äußere Wandabschnitt im Bereich seiner nach oben weisenden Außenkante eine Metall- oder Kunststoffleiste bzw. einen Kantenschutz aus Metall oder Kunststoff aufweist. Insbesondere kann der Halteabschnitt durch eine, vorzugsweise horizontal verlaufende und insbesondere aus Metall bestehende, Verstärkungsleiste des jeweiligen äußeren Wandabschnitts gebildet sein, mit dem ein entsprechender Haken oder Riegel, oder ein sonstiges Sicherungsmittel, des benachbarten inneren Wandabschnitts in Kontakt steht, wenn sich der entsprechende innere Wandabschnitt in seiner Gebrauchsstellung befindet.

Des Weiteren ist es vorteilhaft, wenn die Sicherungsmittel die oben genannten Haken umfassen, wobei jeder Haken einen der Halteabschnitte in der Gebrauchsstellung der inneren Wandabschnitte von oben her übergreift. In diesem Fall wirkt der Haken mit dem Halteabschnitt automatisch zusammen, wenn der innere Wandabschnitt in ungefaltetem Zustand von oben parallel zum entsprechenden äußeren Wandabschnitt in seine Stellung verschoben wird, die er beim bestimmungsgemäßen Gebrauch des Transportbehälters einnimmt.

Die jeweiligen inneren Wandabschnitte und äußeren Wandabschnitte sind also vorzugsweise ohne Einsatz eines Werkzeugs voneinander und/oder vom Bodenabschnitt lösbar.

Zudem ist es allgemein von Vorteil, wenn sämtliche inneren Wandabschnitte und/oder sämtliche äußeren Wandabschnitte miteinander verbunden sind und in der Gebrauchsstellung des Transportbehälters in einer Draufsicht auf denselben eine Rechteckstruktur bilden. Der Transportbehälter umfasst also vorzugsweise vier innere Wandabschnitte und vier äußeren Wandabschnitte. Gegenüberliegende innere Wandabschnitte verlaufen vorzugsweise parallel. Gleiches gilt für gegenüberliegende äußere Wandabschnitte. Ferner schließen aneinander grenzende innere Wandabschnitte jeweils einen 90°-Winkel ein. Ebenso ist es von Vorteil, wenn aneinander grenzende äußere Wandabschnitte jeweils einen 90°-Winkel einschließen.

Ebenso ist es vorteilhaft, wenn der Haken dadurch vom Halteabschnitt lösbar ist, dass die inneren Wandabschnitte in der Gebrauchsstellung des Transportbehälters nach oben von den restlichen Abschnitten des Transportbehälters entfernt werden. Insbesondere sind die inneren Wandabschnitte mit den äußeren Wandabschnitten auch in der Gebrauchsstellung nicht starr verbunden, so dass auch keine Trennung der entsprechenden Wandabschnitte nötig ist, wenn die inneren Wandabschnitte nach oben entfernt werden.

Des Weiteren ist es vorteilhaft, wenn die Sicherungsmittel durch Schnappverbindungen gebildet sind, wobei ein Teil der jeweiligen Schnappverbindung an einem inneren Wandabschnitt mit Faltkante und ein zweiter Teil der entsprechenden Schnappverbindung an einem parallel zum genannten inneren Wandabschnitt verlaufenden äußeren Wandabschnitt angeordnet ist. Weist der Transportbehälter seine Gebrauchsstellung auf, so sind die jeweiligen Schnappverbindungen verriegelt, wodurch die inneren Wandabschnitte mit Faltkante mit den jeweils parallel hierzu verlaufenden äußeren Wandabschnitten verbunden sind. Werden die Schnappverbindungen hingegen gelöst, so entfällt die genannte Verbindung, so dass die inneren Wandabschnitte gefaltet und/oder von dem Bodenabschnitt entfernt werden können.

Besondere Vorteile bringt es schließlich mit sich, wenn zumindest ein Teil der Sicherungsmittel einen Abstand zu einer der Faltkanten aufweist, dessen Betrag maximal 20 cm, maximal 15 cm, beträgt. Die Sicherungsmittel sind in diesem Fall möglichst nahe an der Faltkante platziert. Dies hat den Vorteil, dass die die Faltkanten aufweisenden inneren Wandabschnitte in dem Bereich mit den jeweiligen äußeren Wandabschnitten verbunden sind, in dem sich die jeweiligen parallel zueinander verlaufenden inneren und äußeren Wandabschnitte bei einem Faltvorgang der entsprechenden inneren Wandabschnitte zuerst voneinander entfernen würde.

Im weiteren Verlauf wird ein weiterer vorteilhafter Aspekt eines Transportbehälters beschrieben, wobei die bisher und nachfolgend beschriebenen Merkmale in beliebiger Kombination realisiert werden können, sofern keine offensichtlichen technischen Widersprüche entstehen.

Ein erfindungsgemäßer Transportbehälter kann somit also beispielsweise ein Sicherungsmittel, aber auch das nachfolgend beschriebene Gewebe im Bereich seiner äußeren Wandabschnitte aufweisen.

Der Transportbehälter kann sich nun dadurch auszeichnen, dass zumindest ein Teil der Seitenwände, vorzugsweise alle Seitenwände, jeweils zumindest in ihrem unteren Bereich eine Kunststoffplatte sowie zumindest ein mit der Kunststoffplatte verbundenes Gewebe umfassen. Die jeweilige Kunststoffplatte besitzt vorzugsweise eine Rechteckstruktur und ist mit dem Bodenabschnitt verbunden. Im bestimmungsgemäßen Gebrauch des Transportbehälters liegt die Kunststoffplatte vorzugsweise in einer vertikalen Ebene.

In jedem Fall bildet der Verbund aus der Kunststoffplatte und dem entsprechenden Gewebe eine gegen Stoßeinwirkung äußerst robuste Einheit. Kollidiert nun ein Gabelstapler mit dem Transportbehälter im Bereich der Kunststoffplatte, so wird die hierdurch auf den Transportbehälter einwirkende Kraft absorbiert, ohne dass es zu einer nennenswerten Beschädigung der durch das Gewebe verstärkten Kunststoffplatte kommt.

Vorzugsweise verläuft das Gewebe in einer Ebene, die mit der Ebene, in der die Kunststoffplatte liegt, parallel verläuft.

Insbesondere liegt das Gewebe als Gewebeschicht vor, die zumindest im Bereich eines definierten Abschnitts der einzelnen Seitenwände vorhanden ist. Die Gewebeschicht hat vorzugsweise eine in horizontaler Richtung gemessene Dicke, deren Betrag zwischen 0,5 mm und 4 mm liegt, wenn der Transportbehälter seine bestimmungsgemäße Ausrichtung (d.h.: Bodenfläche horizontal ausgerichtet, Seitenabschnitte erstrecken sich in vertikalen Ebenen ausgehend vom Bodenabschnitt nach oben) aufweist.

Insbesondere bringt es Vorteile mit sich, wenn die Kunststoffplatte als Strukturkammerplatte oder Hohlkammerplatte ausgebildet ist. Eine entsprechende Kunststoffplatte zeichnet sich dadurch aus, dass sie neben Verstrebungen oder sonstigen Abschnitten aus Kunststoff auch eine große Anzahl an Hohlräumen aufweist. Hierdurch entsteht eine Kunststoffplatte mit geringem Gewicht und dennoch hoher mechanischer Stabilität.

Vorteilhaft ist es, wenn das Gewebe auf die Kunststoffplatte laminiert oder kaschiert ist. Ebenso kann das Gewebe zumindest abschnittsweise in die Kunststoffplatte eingeschmolzen oder auf die Kunststoffplatte geklebt sein. In jedem Fall ist es von Vorteil, wenn das Gewebe flächig, vorzugsweise vollflächig, mit der jeweiligen Kunststoffplatte verbunden ist.

Ebenso bringt es Vorteile mit sich, wenn das Gewebe aus Fasern aus Polyester, Polypropylen, Polyethylen, Polyamid und/oder einem vergleichbaren Kunststoff besteht oder zumindest Fasern aus einem oder mehreren der genannten Materialien umfasst. Entsprechende Fasern zeichnen sich durch ihre Beständigkeit gegenüber chemischen Substanzen, wie beispielsweise Reinigungsmitteln, aber auch durch ihre mechanische Beständigkeit aus. Die Fasern können im Übrigen in ein Harz (z.B. einem Kunststoffharz) eingebettet und oder mit einem Harz mit der jeweiligen Kunststoffplatte verbunden sein.

Vorteilhaft ist es zudem, wenn das Gewebe von der dem Aufnahmeraum abgewandten oder der dem Aufnahmeraum zugewandten Seite der jeweiligen Seitenwand sichtbar ist. Das Gewebe kann also von außen auf die jeweilige Kunststoffplatte aufgebracht und mit dieser verbunden sein, wobei es auch möglich ist, dass das Gewebe teilweise in die Kunststoffplatte eingeschmolzen ist. Alternativ hierzu ist es ebenso denkbar, dass das Gewebe derart mit der Kunststoffplatte verbunden ist, dass es ausschließlich von der dem Aufnahmeraum zugewandten Seite der jeweiligen Seitenwand, d.h. vom Inneren des Aufnahmeraums aus, sichtbar ist. Bevorzugt wird jedoch der zuerst genannte Fall, da hier ein von außen einwirkender Gegenstand, wie beispielsweise eine Gabelstaplergabel, zunächst mit dem Gewebe in Kontakt kommt, so dass die einwirkende Kraft schnell flächig auf die hinter dem Gewebe liegende Kunststoffplatte verteilt wird.

Des Weiteren ist es vorteilhaft, wenn das Gewebe innerhalb der Kunststoffplatte angeordnet und von außen nicht sichtbar ist. Das Gewebe kann beispielsweise in die Kunststoffplatte bei oder nach deren Herstellung eingeschmolzen werden, wobei es schließlich allseitig von dem entsprechenden Kunststoff umgeben sein kann.

Im Übrigen ist es auch denkbar, dass die entsprechende Seitenwand mehrere parallel zueinander verlaufende Lagen aus Gewebe umfasst, wobei die einzelnen Lagen entweder von außen mit der Kunststoffplatte verbunden oder wenigstens abschnittsweise innerhalb der Kunststoffplatte angeordnet sind. Beispielsweise wäre es denkbar, dass eine Lage des Gewebes auf der dem Aufnahmeraum abgewandten Seite der Kunststoffplatte angeordnet ist, während eine zweite Lage in die Kunststoffplatte eingearbeitet und von außen nicht sichtbar ist.

Ebenso ist es vorteilhaft, wenn die jeweiligen Seitenwände jeweils einen, mit dem Bodenabschnitt verbundenen, äußeren Wandabschnitt sowie einen, ebenfalls mit dem Bodenabschnitt und/oder dem äußeren Wandabschnitt verbundenen inneren Wandabschnitt aufweisen. Insbesondere ist es von Vorteil, wenn der äußere Wandabschnitt ausgehend vom Bodenabschnitt zwischen 10 cm und 30 cm nach oben ragt, während der innere Wandabschnitt eine Höhe zwischen 50 cm und 150 cm aufweisen sollte. Der innere Wandabschnitt kann beispielsweise ausgehend vom äußeren Wandabschnitt nach oben ragen. Denkbar ist ebenso, dass der innere Wandabschnitt ebenfalls bis zum Bodenabschnitt reicht. Insbesondere sollte jede Seitenwand einen inneren Wandabschnitt und einen äußeren Wandabschnitt umfassen, wobei die jeweiligen Wandabschnitte parallel zueinander verlaufen sollten. Insbesondere stehen die jeweiligen Wandabschnitte einer Seitenwand in direktem Kontakt miteinander und liegen jeweils in einer vertikalen Ebene. Alternativ hierzu können die jeweiligen Seitenwände auch einlagig ausgebildet sein, so dass keine separaten inneren und äußeren Wandabschnitte vorhanden sind.

Auch ist es äußert vorteilhaft, wenn das Gewebe ausschließlich im Bereich der äußeren Wandabschnitte angeordnet ist. In diesem Bereich dienen sie gewissermaßen als Schutzschild gegen von außen einwirkende Gegenstände, wie beispielsweise eine Gabelstaplergabel. Im Gegensatz hierzu sind die inneren Wandabschnitte zumindest im unteren Bereich durch die äußeren Wandabschnitte gegen mechanische Beschädigung geschützt. Es ist daher von Vorteil, wenn die inneren Wandabschnitte kein entsprechendes Gewebe aufweisen. Selbstverständlich ist es auch möglich, auch die inneren Wandabschnitte durch eine Matrix bestehend aus einer Kunststoffplatte und einer oder mehreren Gewebeschichten zu bilden.

Ebenso ist es vorteilhaft, wenn die äußeren Wandabschnitte in einer Draufsicht auf den Transportbehälter gemeinsam eine Rechteckstruktur bilden, die als Ganzes vom Bodenabschnitt entfernbar ist. Die Rechteckstruktur besteht in diesem Fall aus vier äußeren Wandabschnitten, wobei jeweils ein äußerer Wandabschnitt eine Seite der Rechteckstruktur bildet. Zusätzlich oder alternativ ist es ebenso denkbar, dass der Transportbehälter vier innere Wandabschnitte umfasst, die in einer Draufsicht auf den Transportbehälter ebenso eine Rechteckstruktur bilden.

Vorzugsweise sind die äußeren Wandabschnitte mit dem Bodenabschnitt fest verbunden, während die inneren Wandabschnitte lediglich von oben eingesteckt sind und ohne Lösen von Verbindungen nach oben vom Bodenabschnitt abgehoben bzw. entfernt werden können.

Auch ist es von Vorteil, wenn der jeweilige äußere Wandabschnitt im bestimmungsgemäßen Gebrauch des Transportbehälters eine Höhe aufweist, deren Betrag zwischen 10 cm und 30 cm, beträgt.

In einer besonders vorteilhaften Ausführungsform umfasst der Transportbehälter einen Bodenabschnitt, vorzugsweise in Form einer Kunststoffplatte, und vier Seitenwände, wobei jede der Seitenwände einen inneren Wandabschnitt und einen äußeren Wandabschnitt umfasst. Die vier Seitenwände erstrecken sich jeweils von einer Quer- bzw. Längsseite des Bodenabschnitts nach oben, wobei jeweils zwischen zwei benachbarten Seitenwänden vorzugsweise ein 90°-Winkel vorliegt. Vorzugsweise sind die vier äußeren Wandabschnitte auf ihrer dem Aufnahmeraum abgewandten Außenseite mit einem Gewebe versehen, das fest mit dem jeweiligen äußeren Wandabschnitt verbunden ist. Vorzugsweise erstreckt sich das Gewebe über die gesamte Außenseite des jeweiligen äußeren Wandabschnitts bzw. bedeckt zumindest 80 % der Fläche der genannten Außenseite.

Ferner ist es vorteilhaft, wenn das Gewebe elektrisch leitend ausgebildet ist. Dies kann beispielsweise dadurch sichergestellt sein, dass bei der Herstellung des Gewebes eine Kohlenstoffverbindung (z. B. Kohlestaub) in das Gewebe integriert wird. Auch der Einsatz von elektrisch leitenden Fasern bzw. Garnen zur Herstellung des Gewebes ist denkbar. Die in dem Transportbehälter transportierten bzw. gelagerten Bauteile werden hierdurch gegen schädliche elektrostatische Entladungen geschützt (ESD-Schutz).

Weitere Vorteile der Erfindung sind in den nachfolgenden Ausführungsbeispielen beschrieben. Es zeigen, jeweils schematisch:
- **Figur 1**: eine Seitenansicht eines Transportbehälters,
- **Figur 2**: eine Frontansicht des in Figur 1 gezeigten Transportbehälters in Explosionsdarstellung,
- **Figur 3**: eine Darstellung mit gefalteten inneren Wandabschnitten,
- **Figur 4**: eine Perspektive (Figur 4a) sowie eine Seitenansicht einer mit einem Gewebe versehenen Kunststoffplatte,
- **Figur 5**: eine Seitenansicht eines Transportbehälters sowie einen Ausschnitt desselben (rechts),
- **Figur 6**: eine Perspektive eines Transportbehälters, sowie
- **Figur 7**: eine Perspektive der vier inneren Wandabschnitte eines Transportbehälters.

Die wesentlichen Aspekte der vorliegenden Erfindung sind in den nachfolgend beschriebenen Figuren gezeigt.

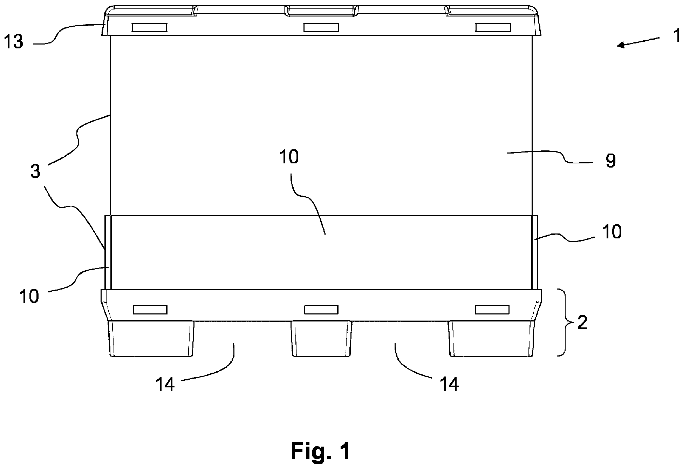

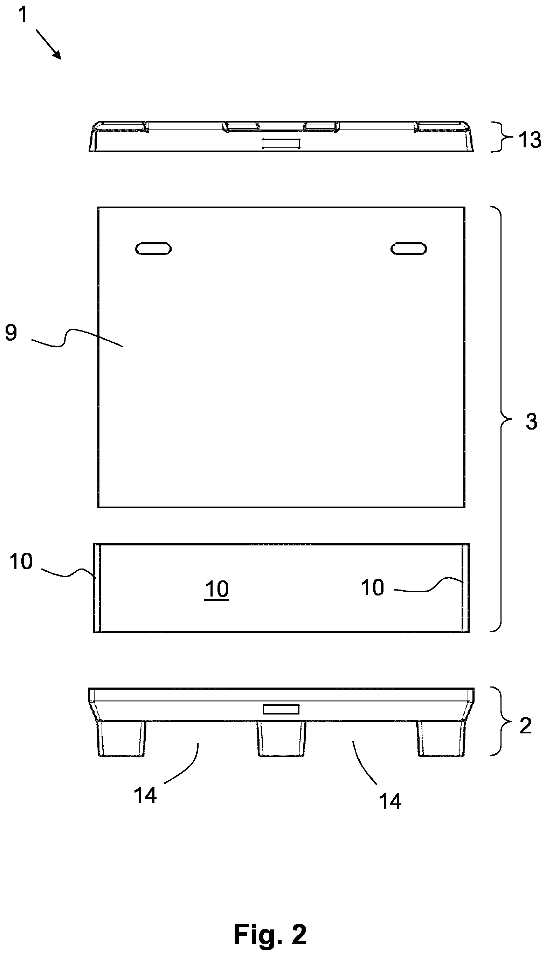

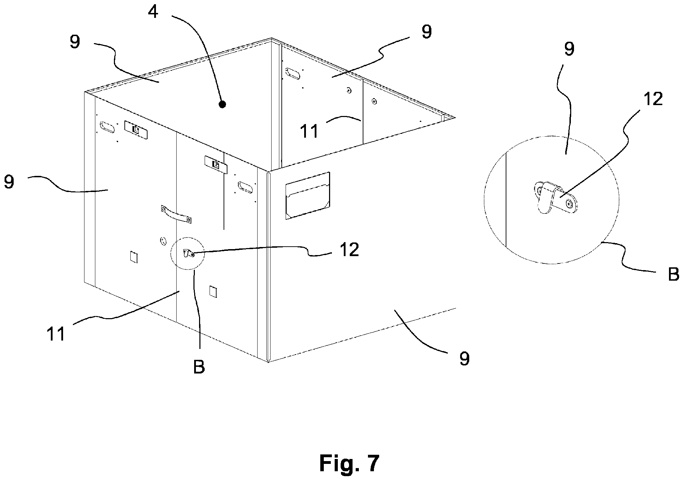

Wie zunächst der Zusammenschau der Figuren 1 bis 3 zu entnehmen ist, besitzt der Transportbehälter 1 unabhängig von den weiteren Merkmalen einen Bodenabschnitt 2, vier Seitenwände 3 sowie vorzugsweise, jedoch nicht zwingend, einen Deckel 13, mit dem sich der innerhalb der Seitenwände 3 befindliche Aufnahmeraum 4 (vergleiche Figur 7) des Transportbehälters 1 verschließen lässt. Die jeweiligen Seitenwände 3 umfassen im gezeigten Beispiel jeweils einen inneren Wandabschnitt 9 sowie einen parallel zu diesem verlaufenden äußeren Wandabschnitt 10.

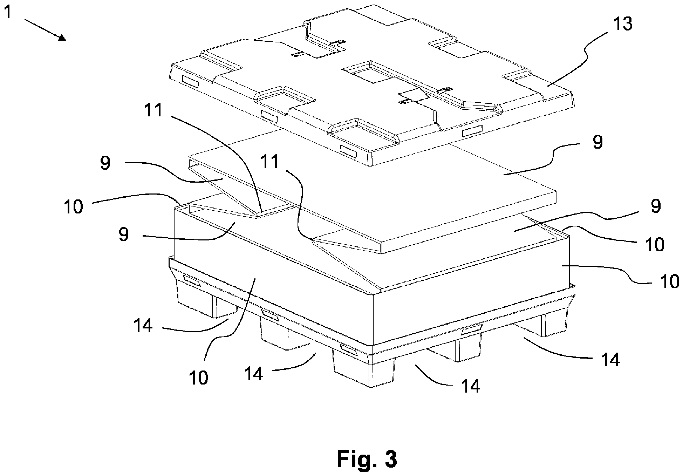

Wie insbesondere Figur 3 zu entnehmen ist, weisen zwei gegenüberliegende innere Wandabschnitte 9 jeweils eine vertikale Faltkante 11 auf, so dass sich die Rechteckstruktur, die aus den vier inneren Wandabschnitten 9 gebildet wird, wie in Figur 3 gezeigt, falten lässt. Werden die inneren Wandabschnitten 9 entsprechend gefaltet, so können diese in dem durch die äußeren Wandabschnitte 10 gebildeten Freiraum platziert und der Freiraum mit dem Deckel 13 verschlossen werden. Das Transportmaß des in diesem Fall leeren Transportbehälters 1 ist hierdurch besonders klein.

Wie den Figuren ebenfalls zu entnehmen ist, weist der Bodenabschnitt 2 mehrere Aussparungen 14 auf, die der Aufnahme einer Gabelstaplergabel oder eines Hubwagens dienen. Bewegt sich nun ein Gabelstapler auf den am Boden stehenden Transportbehälter 1 zu, um die Gabelstaplergabel unterhalb des Bodenabschnitts 2 in den Bereich der Aussparungen 14 zu platzieren, so kommt es immer wieder vor, dass die Gabelstaplergabel mit den Seitenwänden 3, insbesondere mit den äußeren Wandabschnitten 10 kollidieren. Dies ist dann der Fall, wenn der Gabelstaplerfahrer die Gabel beim Anfahren des Transportbehälters 1 zu hoch platziert. Hierdurch kann es zu irreparablen Schäden der entsprechenden Seitenwand 3 kommen.

Gemäß einem vorteilhaften Aspekt der vorliegenden Erfindung ist nun vorgesehen, dass zumindest die äußeren Wandabschnitte 10 durch eine Kunststoffplatte 5 gebildet werden, die mit einem Gewebe 6 verstärkt ist.

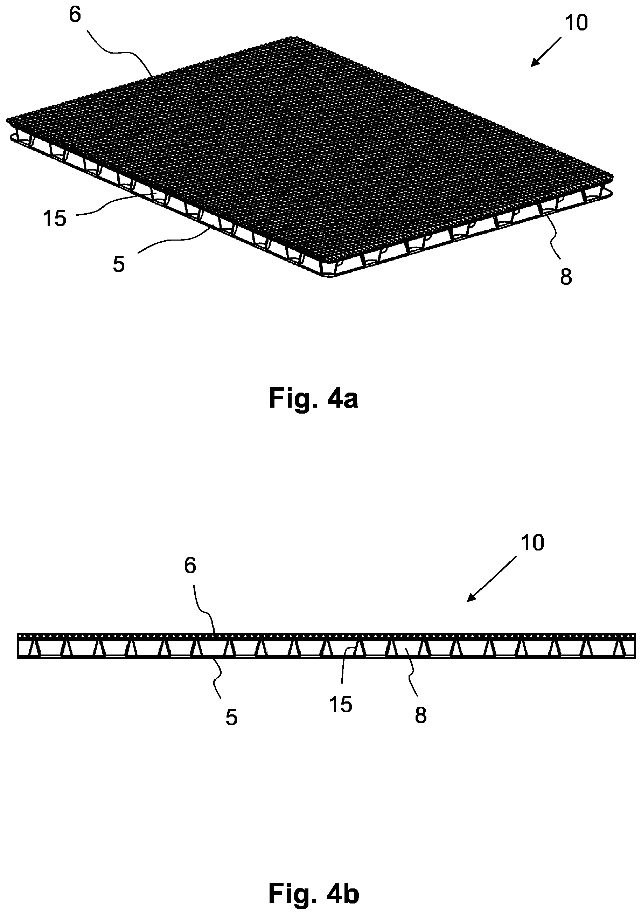

Ein Beispiel einer entsprechenden Verbundplatte aus Kunststoff und Gewebe 6 ist in den Figuren 4A und 4B gezeigt. Insbesondere ist es von Vorteil, wenn die Kunststoffplatte 5 als Hohl- bzw. Strukturkammerplatte vorliegt, die eine Vielzahl von Verstrebungen 15 aufweist, die wiederum eine Vielzahl von Hohlräumen 8 begrenzt. Hierdurch erhält man eine Kunststoffplatte 5 mit niedrigerem spezifischem Gewicht und trotzdem relativ hoher Stabilität.

Insbesondere durch das mit der Kunststoffplatte 5 verbundene Gewebe 6 erhält man einen Verbund, der eine besonders hohe Stabilität gegenüber von außen einwirkenden Stößen aufweist.

Der entsprechende Verbund kann nun entweder als äußerer Wandabschnitt 10 des Transportbehälters 1 zum Einsatz kommen oder aber einen Teil derselben bilden. Ebenso ist es denkbar, dass die Seitenwände 3 des Transportbehälters 1 lediglich aus einem einzigen Wandabschnitt bestehen, der wiederum durch eine entsprechend verstärkte Kunststoffplatte 5 gebildet wird oder eine solche umfasst.

Hinsichtlich weiterer vorteilhafter Merkmale der Kunststoffplatte 5 bzw. des Gewebes 6 wird auf die obige Beschreibung verwiesen.

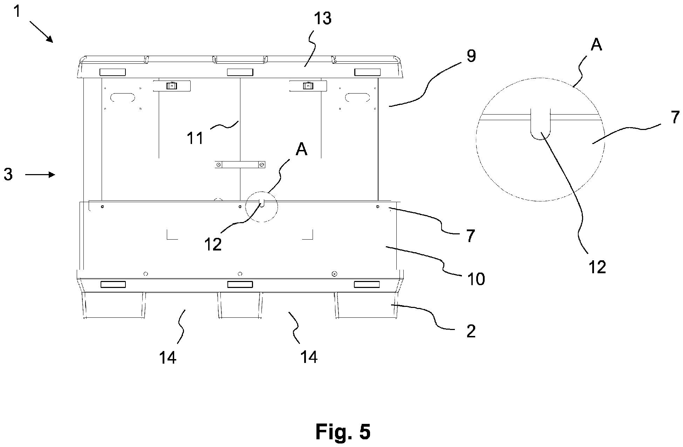

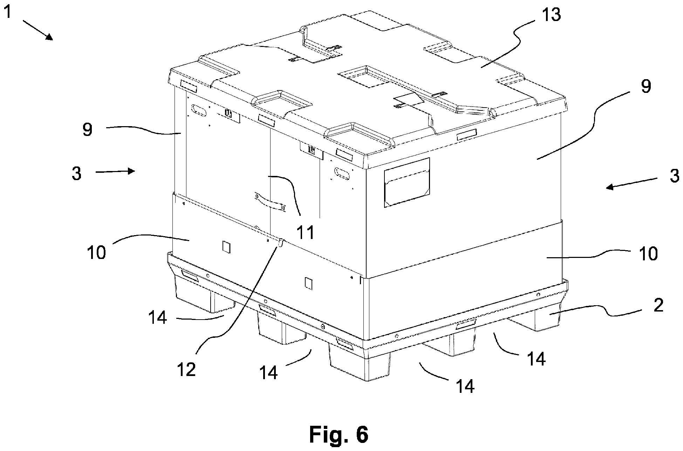

Weitere Merkmale, die alternativ oder zusätzlich zu den bisher beschriebenen Merkmalen realisiert werden können, sind den Figuren 5 bis 7 zu entnehmen.

Wie bereits im Zusammenhang mit Figur 3 beschrieben, ist es von Vorteil, wenn zwei der Seitenwände 3 bzw. zwei der inneren Wandabschnitte 9 eine Faltkante 11 aufweisen, entlang derer die jeweilige Seitenwand 3 bzw. der jeweilige innere Wandabschnitt 9 gefaltet werden kann. Während ein Falten dann erwünscht ist, wenn der Transportbehälter 1 leer gelagert oder transportiert werden soll, ist ein entsprechender Faltvorgang dann unerwünscht, wenn der Transportbehälter 1 mit Bauteilen befüllt ist.

Um diesem unerwünschten Faltvorgang entgegenzuwirken, ist es von Vorteil, wenn der Transportbehälter 1 Sicherungsmittel aufweist, über die die jeweiligen inneren Wandabschnitte 9 mit den parallel hierzu verlaufenden äußeren Wandabschnitten 10 verbunden werden können. Im Ausführungsbeispiel gemäß den Figuren 5 bis 7 werden die jeweiligen Sicherungsmittel durch jeweils einen Haken 12 und eine Verstärkungsleiste 7 gebildet.

Wie den Figuren zu entnehmen ist, ist es von Vorteil, wenn der jeweilige Haken 12 im Bereich eines inneren Wandabschnitts 9 mit Faltkante 11 platziert ist. Hingegen sollte die Verstärkungsleiste 7 Bestandteil des jeweiligen äußeren Wandabschnitts 10 sein. Selbstverständlich ist auch eine gegenteilige Anordnung möglich.

Die in den Figuren 5 bis 7 gezeigte Lösung hat den Vorteil, dass der rechteckige Verbund aus den inneren Wandabschnitten 9 von oben in den durch die äußeren Wandabschnitte 10 gebildeten Freiraum eingesetzt werden kann, wobei die Haken 12 hierbei automatisch mit den Verstärkungsleisten 7 in Kontakt kommen und hierbei eine Sicherung der inneren Wandabschnitte 9 gegenüber den äußeren Wandabschnitten 10 bewirken.

Selbstverständlich können auch die in den Figuren 5 bis 7 gezeigten Seitenwände 3, insbesondere die jeweiligen äußeren Wandabschnitte 10, eine mit einem Gewebe 6 verstärkte Kunststoffplatte 5 aufweisen oder aus einer solchen bestehen.

Die vorliegende Erfindung ist nicht auf die dargestellten und beschriebenen Ausführungsbeispiele beschränkt. Abwandlungen im Rahmen der Patentansprüche sind ebenso möglich wie eine beliebige Kombination der beschriebenen Merkmale, auch wenn sie in unterschiedlichen Teilen der Beschreibung bzw. den Ansprüchen oder in unterschiedlichen Ausführungsbeispielen dargestellt und beschrieben sind, vorausgesetzt, dass kein Widerspruch zur Lehre der unabhängigen Ansprüche entsteht.

### Bezugszeichenliste

- 1: Transportbehälter
- 2: Bodenabschnitt
- 3: Seitenwand
- 4: Aufnahmeraum
- 5: Kunststoffplatte
- 6: Gewebe
- 7: Verstärkungsleiste
- 8: Hohlraum
- 9: innerer Wandabschnitt
- 10: äußerer Wandabschnitt
- 11: Faltkante
- 12: Haken
- 13: Deckel
- 14: Aussparung
- 15: Verstrebung

## Patentansprüche

1. Transportbehälter (1) für Bauteile, wobei der Transportbehälter (1) einen Bodenabschnitt (2) sowie mehrere Seitenwände (3) aufweist, die gemeinsam mit dem Bodenabschnitt (2) einen, im bestimmungsgemäßen Gebrauch von oben und/oder von der Seite zugänglichen, Aufnahmeraum (4) begrenzen, wobei die Seitenwände (3) jeweils einen inneren Wandabschnitt (9) und einen parallel zum inneren Wandabschnitt (9) verlaufenden und eine geringere Höhe als der innere Wandabschnitt (9) aufweisenden äußeren Wandabschnitt (10) umfassen, wobei wenigstens zwei gegenüberliegende innere Wandabschnitte (9) vertikal verlaufende Faltkanten (11) aufweisen, und wobei die zuletzt genannten inneren Wandabschnitte (9) entlang ihrer jeweiligen Faltkante(n) (11) von einer nicht gefalteten Gebrauchsstellung in eine gefaltete Transportstellung faltbar sind,
**dadurch gekennzeichnet, dass**
der Transportbehälter (1) Sicherungsmittel aufweist, mit deren Hilfe die die Faltkanten (11) aufweisenden inneren Wandabschnitte (9) in ihrer Gebrauchsstellung jeweils gegenüber einem äußeren Wandabschnitt (10) fixierbar sind, um einem ungewollten Falten der jeweiligen inneren Wandabschnitte (9) entgegenzuwirken.

2. Transportbehälter (1) gemäß einem der vorangegangenen Ansprüche, **dadurch gekennzeichnet, dass** die Sicherungsmittel Haken (12) oder Riegel umfassen, die im Bereich der die Faltkanten (11) aufweisenden inneren Wandabschnitte (9) und/oder im Bereich der parallel hierzu verlaufenden äußeren Wandabschnitte (10) angeordnet sind.

3. Transportbehälter (1) gemäß einem der vorangegangenen Ansprüche, **dadurch gekennzeichnet, dass** die die Faltkanten (11) aufweisenden inneren Wandabschnitte (9) und/oder die parallel hierzu verlaufenden äußeren Wandabschnitte (10) zumindest einen Halteabschnitt aufweisen, mit denen die Haken (12) oder Riegel in der Gebrauchsstellung der inneren Wandabschnitte (9) zusammenwirken.

4. Transportbehälter (1) gemäß einem der vorangegangenen Ansprüche, **dadurch gekennzeichnet, dass** der Halteabschnitt durch eine, vorzugsweise horizontal verlaufende und insbesondere aus Metall bestehende, Verstärkungsleiste (7) des jeweiligen äußeren Wandabschnitts (10) gebildet ist.

5. Transportbehälter (1) gemäß einem der vorangegangenen Ansprüche, **dadurch gekennzeichnet, dass** jeder Haken (12) einen der Halteabschnitte in der Gebrauchsstellung der inneren Wandabschnitte (9) von oben her übergreift.

6. Transportbehälter (1) gemäß einem der vorangegangenen Ansprüche, **dadurch gekennzeichnet, dass** der Haken (12) dadurch vom Halteabschnitt lösbar ist, dass die inneren Wandabschnitte ausgehend von der Gebrauchsstellung des Transportbehälters (1) nach oben von den restlichen Abschnitten des Transportbehälters (1) entfernt werden.

7. Transportbehälter (1) gemäß einem der vorangegangenen Ansprüche, **dadurch gekennzeichnet, dass** die Sicherungsmittel durch Schnappverbindungen gebildet sind, wobei ein Teil der jeweiligen Schnappverbindung an einem inneren Wandabschnitt (9) mit Faltkante (11) und ein zweiter Teil der entsprechenden Schnappverbindung an einem parallel zum genannten inneren Wandabschnitt (9) verlaufenden äußeren Wandabschnitt (10) angeordnet ist.

8. Transportbehälter (1) gemäß einem der vorangegangenen Ansprüche, **dadurch gekennzeichnet, dass** zumindest ein Teil der Sicherungsmittel einen Abstand zu einer der Faltkanten (11) aufweist, dessen Betrag maximal 20 cm, maximal 15 cm, beträgt.

9. Transportbehälter (1) für Bauteile gemäß einem oder mehreren der vorangegangenen Ansprüche, **dadurch gekennzeichnet, dass** wenigstens ein Teil der Seitenwände (3) jeweils zumindest in ihrem unteren Bereich eine Kunststoffplatte (5) sowie zumindest ein mit der Kunststoffplatte (5) verbundenes Gewebe (6) umfassen.

10. Transportbehälter (1) gemäß dem vorangegangenen Anspruch, **dadurch gekennzeichnet, dass** die Kunststoffplatte (5) als Strukturkammerplatte oder Hohlkammerplatte ausgebildet ist und/oder dass das Gewebe (6) auf die Kunststoffplatte (5) laminiert oder kaschiert, in die Kunststoffplatte (5) zumindest abschnittsweise eingeschmolzen oder auf die Kunststoffplatte (5) geklebt ist.

11. Transportbehälter (1) gemäß einem der vorangegangenen Ansprüche, **dadurch gekennzeichnet, dass** das Gewebe (6) aus Fasern aus Polyester, Polypropylen, Polyethylen, Polyamid und/oder einem vergleichbaren Kunststoff besteht oder zumindest Fasern aus einem oder mehreren der genannten Materialien umfasst.

12. Transportbehälter (1) gemäß einem der vorangegangenen Ansprüche, **dadurch gekennzeichnet, dass** das Gewebe (6) von der dem Aufnahmeraum (4) abgewandten oder der dem Aufnahmeraum (4) zugewandten Seite der jeweiligen Seitenwand (3) sichtbar ist, oder dass das Gewebe (6) innerhalb der Kunststoffplatte (5) angeordnet und von außen nicht oder nur teilweise sichtbar ist.

13. Transportbehälter (1) gemäß einem der vorangegangenen Ansprüche, **dadurch gekennzeichnet, dass** das Gewebe (6) ausschließlich im Bereich der äußeren Wandabschnitte (10) angeordnet ist, und/oder dass das Gewebe (6) elektrisch leitend ausgebildet ist.

14. Transportbehälter (1) gemäß einem der vorangegangenen Ansprüche, **dadurch gekennzeichnet, dass** die äußeren Wandabschnitte (10) gemeinsam eine Rechteckstruktur bilden, die als Ganzes vom Bodenabschnitt (2) entfernbar ist.

15. Transportbehälter (1) gemäß einem der vorangegangenen Ansprüche, **dadurch gekennzeichnet, dass** der jeweilige äußere Wandabschnitt (10) im bestimmungsgemäßen Gebrauch des Transportbehälters (1) eine Höhe aufweist, deren Betrag zwischen 10 cm und 30 cm, beträgt.
